# EUROPEAN PATENT SPECIFICATION

(11) **EP 2 280 899 B1**
(45) Date of publication and mention of the grant of the patent: **04.11.2015**
(21) Application number: 08789960.5
(22) Date of filing: 23.05.2008
(51) Int. Cl.: B60S 9/10, B66C 23/78, B66C 23/80, E02F 9/08

(54) **STABILIZATION SYSTEM FOR LIFTING VEHICLES**
STABILISIERUNGSSYSTEM FÜR HUBFAHRZEUGE
SYSTÈME DE STABILISATION POUR LEVER DES VÉHICULES

(43) Date of publication of application: 09.02.2011
(73) Proprietor: Terexlift S.r.l., 06019 Umbertide (PG) (IT)
(72) Inventor: FORINI, Carlo, I-6019 Umbertide (PG) (IT); BALDINUCCI, Maurizio, I-06024 Gubbio (PG) (IT)
(74) Representative: Bruni, Giovanni
(86) International application number: PCT/IT2008/000344
(87) International publication number: WO 2009/141840

(56) References cited:
- WO-A-99/20505
- DD-A1- 254 931
- DE-U1-202007 008 383
- DE-U1-202007 008 383
- US-A- 3 144 138
- US-A- 5 383 563
- US-A- 5 387 071

## Description

The object of the present finding is a stabilization system, in particular used for telescopic rotatable lifters, which has improved capacity and size characteristics.

Stabilization systems are known at the state of the art and are normally available on the market; such stabilization systems are for industrial vehicles with rotatable telescopic lifters such as crane trucks, trucks with movable ladders to be used for rescue purposes in case of fire. The stabilization systems are mounted on self-moving vehicles characterised by one or more arms for the movement of loads and have the object of creating a counterweight in order to avoid the overturning of the vehicle during the movement of the movable arms. For example, a tower crane with mass m is considered, supported on the ground by means of stabilisers placed a distance from each other equal to "1" and barycentre symmetrically arranged between the stabilisers in machine stop conditions. With the movement of the crane arm, the barycentre varies its position by moving upward, doing thus when the overturning moment, given by the expanding length of the arm due to the force of the hanging load, is greater than the stabilising moment, given by the length of the support arm "1/2" times the force of the permanent load, the crane is overturned. In order to prevent the overturning of the crane, it is sufficient to amplify the distance between the two support arms, or the permanent load, in such a manner that the stabilising moment is greater than the overturning moment. Permanent load increase is easier in the case of a crane used in building sites, characterised in that once positioned, it remains stopped for long periods, usually until the closing of the work site, with respect to a truck with telescopic lifter used for moves of brief duration. In particular, in the case of trucks with telescopic lifters it is simpler to amplify the distance between the two support arms with articulated mechanical systems.

The stabilization systems are distinguished from each other by single or double movement, differentiated in that the support arms are bound with hinge integral with the head of the vehicle, the first to one end of the arm on the same support surface while the second in an intermediate position arranged on surfaces parallel with each other. In particular, the single movement stabilization systems are mounted on vehicles with low load capacity and size. Said systems, while being conceptually simple and economical, ensure a limited length of the stabiliser arm, determined by the distance between the support foot and the longitudinal centre line of the head of the machine, with consequent limitation of the useful capacity of the machine.

The double movement systems have considerably greater stabilization arm lengths with respect to those of the single movement stabilization, and thus they have decidedly higher capacities. Said systems are more complex and costlier, and usually are employed on machines with high load capacity where the greater overall costs of the machine justify this choice.

For example, the utility model application DE202007008383U1, describes a commercial vehicle support means having a fixed central support by whom releasable fixing means can be attached to the vehicle, two supports pivotally connected at the free end portions of the central support, each support is connected to drive means via a respective toggle assembly.

For further example, the patent application GB 2438970 has as object a single movement stabilisation system comprising an articulated system with a plurality of levers and an actuator for the movement as hydraulic cylinder.

According to a further example, such as that described in the patent application US 2005/0236824, a particular double movement stabilisation system is adapted to be used both on flat ground and on slopes, since it is characterised by height-adjustable support feet.

Numerous other embodiments of stabilisation systems for vehicles in general are commercially available. They attain their fundamental objective, which as said is that of stabilising a load in order to prevent the risk of overturning during movement. Nevertheless, sufficient importance has never been given to the possibility of using a single movement stabilisation system for higher loads. The known single movement stabilisation systems, usually used for stabilising limited size vehicles, are inadequate for medium or high size vehicles, for which it is necessary to incur greater production costs, tied to the greater complexity of the double movement stabilisation systems.

One object of the finding, object of the present invention, is that of providing a solution to the technical problem of preventing the overturning of medium-capacity self-moving vehicles with movable arms, or defining a single movement stabilisation system with greater support arm.

The finding, object of the present invention, is therefore a stabilization system, in particular single movement, with the characteristics set forth in claim 1.

More in particular, said stabilization system, in the preferential embodiment of a single movement stabilization system for rotatable telescopic lifters, is equipped with a greater support arm, due to the oblique position of the actuator means of the arm movement with respect to the symmetry axis of the machine head.

Clearly, the stabilization system is not limited to rotatable telescopic lifters but can be any other vehicle with at least one movable arm, this further vehicle consequently being subject to the same drawbacks. Only as a descriptive example below will reference be made to a stabilization system for rotatable telescopic lifters.

These and other advantages will be evident from the detailed description of the invention which will make reference to the tables 1/4 - 4/4, in which several absolutely non-limiting preferential embodiments of the present finding are represented.

In particular:

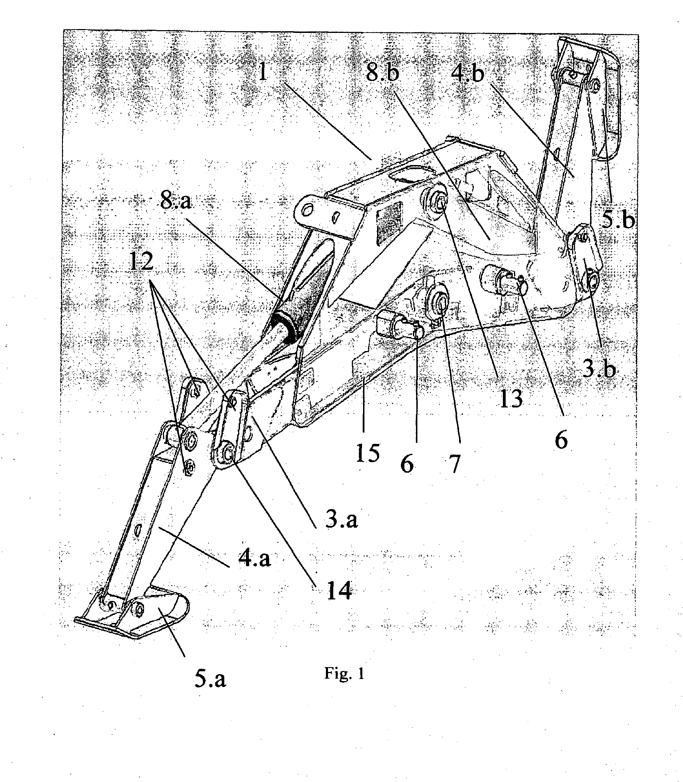

- Fig. 1 shows, in perspective view, the stabilization system comprising a stabiliser arm in closed position and a stabiliser arm in open position;
- Fig. 2 represents, in axonometric view, a stabiliser arm with cylinder and arm in closed position;
- Fig. 3 shows, in axonometric view, a stabiliser arm with cylinder in partially open position and arm in closed position;
- Fig. 4 represents, in axonometric view, a stabiliser arm with cylinder and arm in open position;
- Fig. 5 shows a section of the locking device of the extended extractable element;

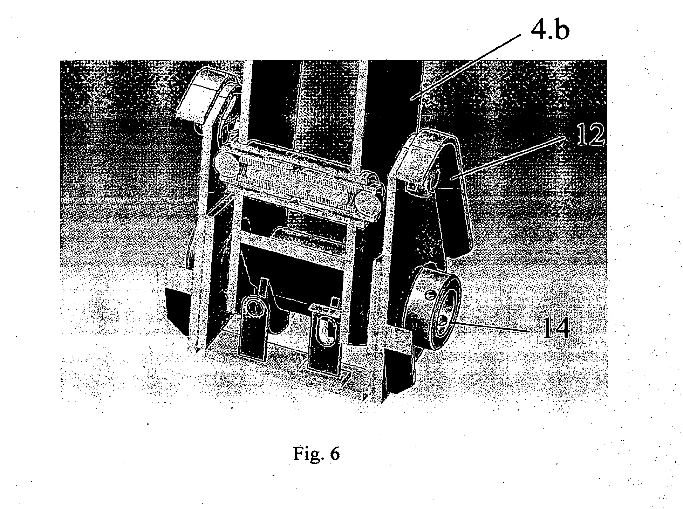

- Fig. 6, finally, shows a section of the locking device of the arm in closed position.

With reference to the aforesaid figures, the stabilization system according to the invention is generically indicated with 1. Said stabilization system comprises a head with at least two stabilization arms 2 arranged in a symmetric manner with respect to the symmetry plane of the head of a vehicle, perpendicular to the ground surface. Said stabilization arm 2 comprises an extractable element 3 inside a sliding guide element 15, at whose end an arm 4 with a support foot 5 is bound with hinge 14, at least one movement actuator means of the arm 4, such as a hydraulic cylinder 8, at least one actuator element of the movement of the extractible element 3, such as a tie rod element 11. Said tie rod element 11 permits the sliding of the extractable element 3 in the sliding guide 15; moreover, in order to minimise the friction both on the extractable element 3 and on the sliding element 15, a plurality of sliding locks 10 are present.

Said movement actuator means 8,11 are controlled by a mechanical lock 12 placed between the arm 4 and the extractable element 3 and by a locking pin 6 of the extractable element in order to execute the movements according to a predefined sequence.

Said stabilization arms 2 are bound together by means of two pins 7,13 to the vehicle head, of which the pin 7 connects the ends of the extractable element movement actuator means 11 while the pin 13 the actuator means of the movement of the arm 4. Said pins 7,13 are arranged along the symmetry axis of the head of the vehicle, the first in the upper part, while the second in intermediate position.

Said stabilization system during use assumes closed position or open position. In particular, in open position the stabilization arms are adapted to lift the load from the ground surface to an intermediate position. In closed position, on the other hand, the stabiliser arms are withdrawn into the head of the vehicle and follow the profile of the vehicle itself.

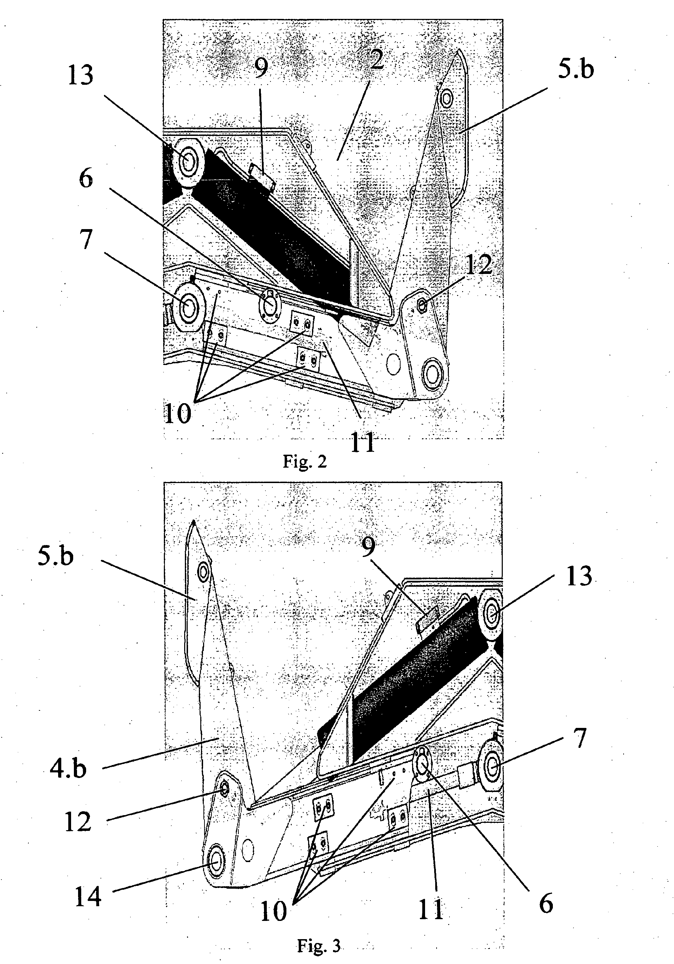

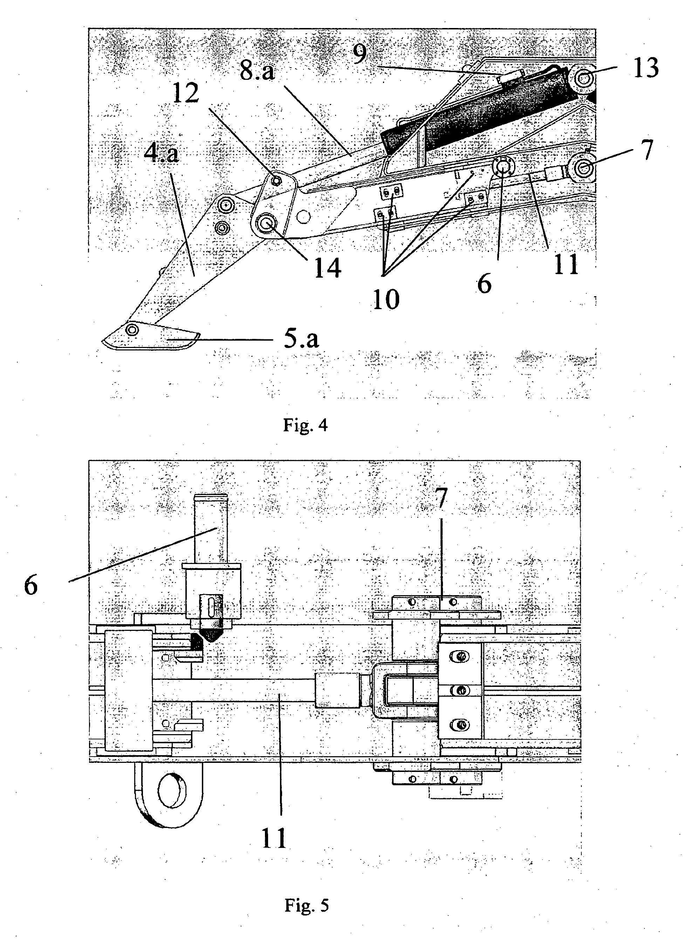

Said stabiliser arms 2 operate simultaneously on opposite sides of the vehicle, in particular when the stabiliser arm 2 is in closed position, the actuator means 8.b, 11.b are compressed, and the arm 4.b and the foot 5.b assume a vertical position, as depicted in fig. 2. In open position, the actuator means 8.a, 11.a are extended, and the arm 4.a and the foot 5.a assume a horizontal position as shown in fig. 4.

The functioning principle of said stabilization system is characterised in that from the closed position, the movement actuator means of the arm, such as the hydraulic cylinder 8, is hydraulically extended, and the locking pin 6 is pressurised to extend, thus pushing the lock pin 6 with conical surface against the flank of the extractable element which can slide in the guide. In this step, the rotation of the arm 4 towards the bottom is prevented by the mechanical lock 12 placed between the arm and the extractable element. When said extractable element is completely extended, i.e. the internal baffle of the extractable element 3 reaches the external redge placed on the tie rod, the lock pin 6, no longer finding the resistance of the flank of the extractable element 3, can slide towards the interior of the head and in this manner ensure the extended locking condition of the extractable element itself.

Once the extended locking condition of the extractable element is attained, the arm 4, having overcome the resistance of the mechanical lock 12 placed between the arm and extractable element, rotates until the foot bound thereto at one end is set on the ground, and with a further extension of the hydraulic cylinder 8 the load is lifted from the ground and locked in intermediate position with the attainment of the open position, as indicated in fig. 4.

In addition, said stabilisation system from an open position returns to closed position when the hydraulic cylinder 8 is controlled to withdraw until the arm 4 has assumed horizontal position, with inserted lock pin 6. In particular, the lock pin 6 is inserted since the pin 7 is protected by a locking electrovalve, which will be opened only when a suitable sensor, mounted inside the articulation of the arm 4, recognises the arm in vertical position. Once the arm has assumed a vertical position, the sensor opens the lock valve of the locking pin 7 of the extractable element, making the lock pin 6 re-enter, and thus liberating the extractable element, which will now be free to re-enter into its closed position.

The stabilisation system, object of the present invention, permits stabilising greater loads by means of stabilising arms with greater length than the single movement stabilization systems, since the hydraulic cylinders of the two arms are connected with a pin in the upper part of the head, obtaining a useful stroke of the greater extractable element. To this advantage, one adds the simple structural and actuation structures due to a single control that operates the hydraulic cylinder, as well as lower production costs and weights. A preferential application is that used in machines with intermediate level capacity. The mentioned advantages are evident from the results obtained during experimental research on a rotatable telescopic lifter. In fact, this produced an increase in the lateral support length of the stabilisers on the order of 27% with respect to that theoretically obtainable with a simple single movement stabiliser and with an increase of the open position capacity on the order of 60%. When a double movement stabilization system is compared with a single movement, one has an increase of lateral support length of the stabilisers on the order of 44%. A further advantage of said system is a particular safety expedient of the machine such that in case of failure of the control sensor of the locking pin 7, potentially critical situations are not created since the arm remains locked in vertical position.

## Claims

1. Single movement stabilisation system comprising the head of a vehicle for housing at least two stabiliser arms (2) arranged in a symmetric manner with respect to the symmetry plane of the head of a vehicle, perpendicular to the ground surface further comprising the fact that:
• said stabiliser arm (2) comprises an extractable element (3) inside a sliding guide element (15), at whose end an arm (4) with a support foot (5) is bound with hinge (14), as well as at least one actuator means of the movement of the arm (4) such as a hydraulic cylinder (8), at least one actuator element of the movement of the extractable element (3) such as a tie rod element (11);
• said arm movement actuator means (8,11) are obliquely positioned with respect to the ground surface in order to utilise the maximum useful stroke;
• said movement actuator means (8,11) are controlled by stopping means,
and **characterized in that** said stabiliser arms (2) are bound, along the symmetry plane of the vehicle head, to each other by means of two pins (7,13), being a first pin (13), which is placed in the upper portion of the head, and a second pin in intermediate position, of which pin (7), connects the ends of the extractable element motion actuator means (11) and pin (13) connects the ends of the actuator means of the movement of the arm (4).

2. Single movement stabilisation system according to claim 1, **characterised in that** said stopping means comprise a mechanical lock (12), placed between the arm (4) and the extractable element (3), and a locking pin (6) of the extractable element.

3. Single movement stabilisation system according to claims 1 and 2, **characterised in that** said stabiliser arms (2) operate simultaneously and concordantly on opposite sides of the vehicle.

4. Single movement stabilisation system according to one of the claims 1-3, **characterised in that** said stabiliser arm (2) is in closed position, when the movement actuator means (8.b), (11.b) are compressed, and the arm (4.b) and the foot (5.b) assume a vertical position.

5. Single movement stabilization system according to one of the preceding claims, **characterised in that** said stabiliser arm (2) is in open position, when the movement actuator means (8.a), (11.a) are extended, and the arm (4.a) and the foot (5.a) assume a horizontal position.

6. Single movement stabilisation system according to one of the preceding claims, **characterised in that** inside said arm (4), a sensor is mounted adapted to recognise the position of the arm (4) in vertical or horizontal position.

7. Single movement stabilisation system according to one of the preceding claims, **characterised in that** said the rod element (11) permits the sliding of the extractable element (3) in the sliding guide (15).

8. Single movement stabilisation system according to one of the preceding claims, **characterised in that** a plurality of sliding blocks (10) are attached on both said extractable element (3) and on said sliding guide (15), in order to minimise the friction during the sliding of the extractable element (3).

9. Method for operating a single movement stabilization system according to one of the proceeding claims, **characterised by** the following steps:
• from the closed position, the actuator means of the arm movement, such as the hydraulic cylinder (8), is hydraulically extended;
• the locking pin (6) is pressurised to extend, thus pushing the lock pin (6) against the flank of the extractable element (3);
• the extractable element can slide in the guide, while the downward rotation of the arm (4) is prevented by the mechanical lock (12) placed between the arm (4) and the extractable element (3);
• the extractable element that is completely extended, i.e. the baffle inside the extractable element (3) reaches the eternal edge placed on the tie rod (11), lock pin (6) slides towards the interior of the head and in a manner such to ensure an extended locking condition of the extractable element itself;
• from the extended locking condition of the extractable element, the arm (4), having overcome the resistance of the mechanical lock (12), rotates until the foot bound thereto is set at one end on the ground;
• with a further extension of tne hydraulic cylinder (8), the load is lifted from the ground and locked in intermediate position with the attainment of the open position;
• from an open position, it passes to a closed position when the hydraulic cylinder (8) is commanded to withdraw until the arm (4) assumes the vertical position with inserted locking pin (6);
• a sensor recognises the vertical position of the arm (4), and opens the lock valve of the locking pin (7) of the extractable element, by making the lock pin (6) re-enter;
• the extractable element (3) that re-enter up to the closed position.

10. Use of a single movement stabilisation system, as defined in one of the preceding claims, in industrial-use lifting vehicles, in particular vehicles equipped with rotatable telescopic lifters and others, such as tower cranes, telescopic hoist.

## Patentansprüche

1. Stabilisierungssystem mit einziger Bewegung umfassend den Kopf eines Fahrzeuges zur Unterbringung von mindestens zwei Stabilisierungsarmen (2), die symmetrisch relativ zu der Symmetrieebene des Kopfes eines Fahrzeuges und senkrecht zu der Bodenfläche angeordnet sind, ferner die Tatsache umfassend, dass:
* der besagte Stabilisierungsarm (2) ein ausziehbares Element (3) innerhalb eines Elements mit Schiebeführung (15) umfasst, an dessen Ende ein Arm (4) mit einem Stützenfuß (5) mit Scharnier (14) verbunden ist und auch mindestens ein Betätigungsmittel zur Bewegung des Arms (4) nach Art eines Hydraulikzylinders (8), mindestens ein Betätigungselement für die Bewegung des ausziehbaren Elements (3) nach Art eines Elements mit Zugstange (11), umfasst;
* die besagten Betätigungsmittel (8, 11) der Bewegung des Arms schräg in Bezug auf die Bodenfläche positioniert sind, um den maximalen nutzbaren Hub zu nutzen;
* die besagten Betätigungsmittel (8, 11) für die Bewegung sind durch Anschlagmittel gesteuert werden,
und **dadurch gekennzeichnet, dass** die besagten Stabilisierungsarme (2) durch zwei Stifte (7, 13) entlang der Symmetrieebene des Kopfes des Fahrzeuges zueinander verbunden sind, wobei ein erster Stift (13) im oberen Teil des Kopfes angeordnet ist und ein zweiter Stift in einer Zwischenposition angeordnet ist, wobei der Stift (7) die Enden der Betätigungsmittel (11) für die Bewegung des ausziehbaren Elements und der Stift (13) die Enden der Betätigungsmittel für die Bewegung des Arms (4), verbindet.

2. Stabilisierungssystem mit einziger Bewegung nach Anspruch 1, **dadurch gekennzeichnet, dass** die besagten Anschlagmittel einen mechanischen Anschlag (12) umfassen, der zwischen dem Arm (4) und dem ausziehbaren Element (3) und einem Verriegelungsstift (6) des ausziehbaren Elements, angeordnet ist.

3. Stabilisierungssystem mit einziger Bewegung nach Anspruch 1 und 2, **dadurch gekennzeichnet, dass** die besagten Stabilisierungsarme (2) gleichzeitig und zusammen auf entgegengesetzten Seiten des Fahrzeuges arbeiten.

4. Stabilisierungssystem mit einziger Bewegung nach einem der Ansprüche 1 -3, **dadurch gekennzeichnet, dass** der besagte Stabilisierungsarm (2) sich in einer geschlossenen Position befindet, wenn die Betätigungsmittel (8.b), (11.b) zusammengedrückt sind, und der Arm (4.b) und der Fuß (5.b) eine vertikale Position einnehmen.

5. Stabilisierungssystem mit einziger Bewegung nach einem der vorhergehenden Ansprüche, **dadurch gekennzeichnet, dass** der besagte Stabilisierungsarm (2) sich in einer offenen Position befindet, wenn die Betätigungsmittel (8.a), (11.a) für die Bewegung verlängert sind, und der Arm (4.a) und der Fuß (5.) eine horizontale Position einnehmen.

6. Stabilisierungssystem mit einzigen Bewegung nach einem der vorhergehenden Ansprüchen, **dadurch gekennzeichnet, dass** innerhalb des besagten Arms (4) ein Sensor angebracht ist, der in der Lage ist, die Position des Armes (4) in einer vertikalen oder horizontalen Position zu erkennen.

7. Stabilisierungssystem mit einziger Bewegung nach einem der vorhergehenden Ansprüche, **dadurch gekennzeichnet, dass** das besagte Element mit Treibstange (11) das Verschieben des ausziehbaren Elements (3) in die Gleitschiene (15) erlaubt.

8. Stabilisierungssystem mit einziger Bewegung nach einem der vorhergehenden Ansprüche, **dadurch gekennzeichnet, dass** eine Vielzahl von Gleitblöcken (10) sowohl auf dem besagten ausziehbaren Element (3), als auch auf der besagten Gleitführung (15), befestigt sind, um die Reibung während des Gleitens des ausziehbaren Elements (3) zu minimieren.

9. Verfahren zur Verwendung eines Stabilisierungssystems mit einziger Bewegung nach einem der vorhergehenden Ansprüche, **gekennzeichnet durch** folgende Operationen:
* von der geschlossenen Stellung ausgehend, werden die Betätigungsmittel für die Bewegung des Arms, wie der Hydraulikzylinder (8), hydraulisch ausgedehnt;
* der Verriegelungsstift (6) wird erzwungen sich derart zu verlängern, dass der Verriegelungsstift (6) gegen die Seite des ausziehbaren Elements (3) gedrückt wird;
* das ausziehbare Element kann in der Führung schieben, während die nach unten gerichtete Drehung des Arms (4) **durch** den mechanischen Anschlag (12) behindert wird, der zwischen dem Arm (4) und dem ausziehbaren Element (3) angeordnet ist;
* wenn das ausziehbare Element vollständig ausgefahren ist, d.h. wenn der Deflektor innerhalb des ausziehbaren Elements (3) den äußeren auf der Triebstange (11) angeordneten Rand erreicht, gleitet der Anschlagstift (6) in Richtung des Inneren des Kopfes, derart, dass eine verlängerter Verriegelungszustand desselben ausziehbaren Elements gewährleistet ist;
* von dem verlängerten Verriegelungszustand des extrahierbaren Elements ausgehend, wird der Arm (4) nachdem er den Widerstand des mechanischen Anschlags (12) überwunden hat, derart gedreht, dass der damit verbundener Fuß an einem Ende auf dem Boden angeordnet wird;
* mit einem weiteren Ausfahren des Hydraulikzylinders (8), wird die Last von dem Boden angehoben und in einer Zwischenstellung nach dem Erreichen der Offenposition verriegelt;
* von einer offenen Position ausgehend, wird er in eine geschlossene Position verlagert, wenn der Hydraulikzylinder (8) sich zurückzuziehen gesteuert wird, bis der Arm (4) die aufrechte Position mit dem eingefügten Anschlagstift (6), übernimmt;
* ein Sensor erkennt die vertikale Position des Armes (4), und öffnet das Verriegelungsventil des Verriegelungsanschlags (7) des ausziehbaren Elements, **durch** Zurückziehen des Anschlagstifts (6);
* das ausziehbare Elements (3) wird in die geschlossene Position zurückbewegt.

10. Verwendung eines Stabilisierungssystems mit einzelner Bewegung wie in einem der vorhergehenden Ansprüche definiert, in Hebefahrzeugen für den industriellen Einsatz, insbesondere für mit teleskopisch rotierenden Hebern ausgerüsteten Fahrzeuge und dergleichen, wie Turmkräne, teleskopischen Hebezeugen.

## Revendications

1. Système de stabilisation à mouvement unique comprenant la tête d'un véhicule pour loger au moins deux bras de stabilisation (2) disposés symétriquement par rapport au plan de symétrie de la tête d'un véhicule, perpendiculaire à la surface de fond, comprenant en outre le fait que:
* ledit bras de stabilisation (2) comprend un élément extractible (3) à l'intérieur d'un élément de guidage (15) à glissière, sur l'extrémité duquel un bras (4) avec un pied de support (5) est relié par une charnière (14) et également au moins un moyen d'actionnement pour le déplacement du bras (4) du type d'un vérin hydraulique (8), au moins un élément d'actionnement pour le mouvement de l'élément extractible (3) du type d'un élément à tige de traction (11);
* lesdits moyens d'actionnement (8, 11) du mouvement du bras sont positionnés en biais par rapport à la surface de fond afin d'utiliser la course utile maximale;
* lesdits moyens (8, 11) du mouvement d'actionnement sont commandés par l'intermédiaire de moyens de butée,
et **caractérisé en ce que** lesdits bras de stabilisation (2) sont reliés, le long du plan de symétrie de la tête du véhicule, un à l'autre par deux pivots (7, 13), un premier pivot (13) étant placé dans la partie supérieure de la tête, et un deuxième pivot se trouvant dans une position intermédiaire, ledit pivot (7) reliant les extrémités des moyens d'actionnement (11) du mouvement d'extraction de l'élément et le pivot (13) reliant les extrémités du moyen d'actionnement de déplacement du bras (4).

2. Système de stabilisation à mouvement unique selon la revendication 1, **caractérisé en ce que** lesdits moyens de butée comprennent une butée mécanique (12) placée entre le bras (4) et l'élément extractible (3), et un pivot de verrouillage (6) de l'élément extractible.

3. Système de stabilisation à mouvement unique selon la revendication 1 ou 2, **caractérisé en ce que** lesdits bras de stabilisation (2) fonctionnent simultanément et ensemble sur des côtés opposés du véhicule.

4. Système de stabilisation à mouvement unique selon l'une des revendications 1 -3, **caractérisé en ce que** ledit bras de stabilisation (2) se trouve dans une position fermée, lorsque les moyens (8.b) qui produisent le mouvement sont comprimés, et le bras (4.b) et le pied (5.b) prennent une position verticale.

5. Système de stabilisation à mouvement unique selon l'une quelconque des revendications précédentes, **caractérisé en ce que** ledit bras de stabilisation (2) se trouve dans une position ouverte, lorsque les moyens (8.a), (11.a) qui produisent le mouvement sont étendus, et le bras (4.a) et le pied (5.a) prennent une position horizontale.

6. Système de stabilisation à mouvement unique selon l'une quelconque des revendications précédentes, **caractérisé en ce qu'**à l'intérieur dudit bras (4) est monté un capteur adapté pour détecter la position du bras (4) dans une position verticale ou horizontale.

7. Système de stabilisation à mouvement unique selon l'une quelconque des revendications précédentes, **caractérisé en ce que** ledit élément de tige de traction (11) permet le coulissement de l'élément extractible (3) dans la glissière (15).

8. Système de stabilisation à mouvement unique selon l'une quelconque des revendications précédentes, **caractérisé en ce qu'**une pluralité de blocs coulissants (10) sont fixés soit sur ledit élément extractible (3) soit sur ladite glissière (15), de façon à minimiser la friction pendant le coulissement de l'élément extractible (3).

9. Méthode pour l'utilisation d'un système de stabilisation à mouvement unique selon l'une quelconque des revendications précédentes, **caractérisé par** les opérations suivantes:
* à partir de la position fermée, le moyen d'actionnement du mouvement du bras, du type d'un vérin hydraulique (8), est prolongé hydrauliquement;
* le pivot de verrouillage (6) est poussé par la pression de manière à étendre et ensuite à pousser le pivot de verrouillage (6) contre le côté de l'élément extractible (3);
* l'élément extractible peut coulisser dans le guide, tandis que la rotation vers le bas du bras (4) est empêchée par la butée mécanique (12) placée entre le bras (4) et l'élément extractible (3) ;
* lorsque l'élément extractible est complètement étendu, à savoir le déflecteur à l'intérieur de l'élément extractible (3) atteint le bord extérieur placé sur la tige de traction (11), le pivot de verrouillage (6) coulisse vers l'intérieur de la tête de manière à assurer une condition de verrouillage prolongée de l'élément extractible lui-même;
* à partir de l'état prolongé de l'élément extractible, le bras (4) après avoir passé la résistance mécanique (12), tourne jusqu'à ce que le pied associé à celui-ci est disposé à une extrémité sur le fond;
* avec une extension ultérieure du vérin hydraulique (8), la charge est soulevée du fond et verrouillée dans une position intermédiaire pour atteindre la position ouverte;
* à partir d'une position ouverte, elle passe à une position fermée lorsque le cylindre hydraulique (8) est actionné de façon à se retirer jusqu'à ce que le bras (4) ne prend pas la position verticale avec le pivot de verrouillage (6) inséré;
* un capteur détecte la position verticale du bras (4), et ouvre la vanne d'arrêt du pivot de verrouillage (7) de l'élément extractible, par rétraction du pivot de verrouillage (6);
l'élément extractible (3) est renvoyé vers la position fermée.

10. Utilisation d'un système de stabilisant à mouvement unique, comme cela est défini dans l'une quelconque des revendications précédentes, dans le levage de véhicules à usage industriel, en particulier pour des véhicules munis d'un moyen de levage télescopique rotatif et analogues, tels que des grues à tour, des treuils télescopiques.
